# EUROPÄISCHE PATENTSCHRIFT

(11) **EP 3 320 048 B1**
(45) Veröffentlichungstag und Bekanntmachung des Hinweises auf die Patenterteilung: **17.04.2019**
(21) Anmeldenummer: 16732478.9
(22) Anmeldetag: 08.06.2016
(51) Int. Cl.: C09D 5/00

(54) **VERFAHREN ZUR HERSTELLUNG ABZIEHBARER BESCHICHTUNGEN AUF METALLISCHEN SUBSTRATEN**
METHOD FOR FORMING RELEASABLE COATINGS ON METALLIC SUBSTRATES
PROCEDE DE FABRICATION DE REVETEMENTS PELABLES SUR DES SUBSTRATS METALLIQUES

(30) Priorität: 07.07.2015 EP 15175615
(43) Veröffentlichungstag der Anmeldung: 16.05.2018
(73) Patentinhaber: Akzo Nobel Coatings International B.V., 6824 BM Arnhem (NL)
(72) Erfinder: PIECHA, Christoph, 26935 Stadtland (DE); SEEGER, Dirk, 26125 Oldenburg (DE)
(74) Vertreter: Akzo Nobel IP Department
(86) Internationale Anmeldenummer: PCT/EP2016/062986
(87) Internationale Veröffentlichungsnummer: WO 2017/005443

(56) Entgegenhaltungen:
- WO-A1-92/11324
- WO-A1-97/35932
- US-A- 3 661 840
- US-A- 4 946 711
- US-B1- 6 403 222

## Beschreibung

Die vorliegende Erfindung betrifft ein Verfahren zur Herstellung von abziehbaren Beschichtungen (das heißt Abziehlackschichten) auf metallischen Substraten. Ebenso betrifft die vorliegende Erfindung die nach dem Verfahren hergestellten, auf metallischen Substraten angeordneten abziehbaren Beschichtungen. Die Beschichtungen können beispielsweise selektiv von der Substratoberfläche abgezogen werden. Im Falle eines selektiven Abziehens kann dies sehr exakt und variabel stattfinden, sodass nach dem Abziehen eine optimal auf die individuellen Umstände angepasste Oberfläche resultiert. Dies bedeutet, dass nach dem Abziehen ein exakt angepasster Anteil der Substratoberfläche freiliegt (nämlich der Teil, von dem die Beschichtung abgezogen wurde) und ein ebenso angepasster Teil der Oberfläche nach wie vor von der Beschichtung bedeckt ist. Aus diesem Grund eignen sich die Beschichtungszusammensetzung und die Beschichtung hervorragend für das selektive chemische Fräsen von Metallsubstraten wie es beispielsweise im Flugzeugbau zum Einsatz kommt. Gegenstand der vorliegenden Erfindung ist demnach auch ein Verfahren zum chemischen Fräsen von metallischen Substraten.

### Stand der Technik

Im Bereich des Flugzeugbaus werden verschiedene Metalle und metallische Legierungen als Grundbaumittel für den Außenhüllenbau von Flugzeugen verwendet. Die aus diesen Grundbaumitteln hergestellten Einzelbauteile, müssen in Abhängigkeit von ihrer Tragkraft und der Gesamtstatik des Flugzeuges auf unterschiedliche Stärken einstellbar sein. Zusätzlich spielt das Endgewicht eines Flugzeuges eine entscheidende Rolle für die anschließende Wirtschaftlichkeit des Flugzeuges. Aus diesem Grund bestehen bereits in der Bauphase eines Flugzeuges starke Bemühungen eine Gewichtsreduktion der Einzelbauteil bei gleichbleibender Qualität und Stabilität zu ermöglichen. Berechnungen haben gezeigt, dass bei vielen Bauteilen ein Potential besteht in bestimmten Segmenten die Stärke des Bauteils zu reduzieren ohne die Tragfähigkeit oder die Statik negativ zu beeinflussen. Aus diesem Grund besteht durch die selektive Ausdünnung von bestimmten Segmenten eines Bauteils ein sehr großes Potential das Gesamtgewicht eines Flugzeuges zu reduzieren.

Aufgrund der hervorragenden Eigenschaften, wie z.B. einer hohen Festigkeit und hohen Korrosionsbeständigkeit bei gleichzeitiger Flexibilität, und des relativ geringen Gewichtes, kommen im Flugzeugbau vorzugsweise Aluminiumbauteile bzw. Bauteile aus Aluminumlegierungen zum Einsatz.

Aufgrund technischer Limitierungen werden zur Einstellung der Stärke von verschiedenen Segmenten der Bauteile keine mechanischen Fräsen verwendet. Stattdessen kommen chemische Fräsbäder zum Einsatz. Diese chemischen Fräsbäder können alkalisch oder sauer sein. Vorwiegend kommen alkalische Fräsbäder zum Einsatz. Diese enthalten beispielsweise 5 bis 35 %ige NaOH Lösungen und weisen Temperaturen im Bereich von 60 bis 100 °C auf. Fräsprozesse in alkalischen Fräsbädern dauern in der Regel zwischen 4 und 6 Stunden an. Fräsbäder, die einen sauren pH-Wert aufweisen, enthalten beispielsweise 32 %ige Salpetersäure und die üblichen Fräszeiten liegen bei etwa 30 Minuten.

Das Fräsen erfolgt über ein vollständiges Eintauchen der zu bearbeitenden Bauteile in die jeweiligen Fräsbäder. Da das gesamte Bauteil in die Fräsbäder eingetaucht wird und dadurch vollständig mit Chemikalien bedeckt ist, müssen nicht zu fräsende Bereiche geschützt werden. Dies geschieht überwiegend durch Beschichtungen, welche vor dem Fräsprozess durch Applikation und Härtung entsprechender Beschichtungszusammensetzungen auf dem Bauteil hergestellt werden. Dabei werden die Bauteile zunächst vollständig beschichtet und anschließend werden die zu fräsenden Segmente des Bauteils durch selektives Abziehen der Beschichtung demaskiert. Das selektive Abziehen wird in der Regel durch Einschneiden der Beschichtung beziehungsweise Ausschneiden der entsprechenden zu demaskierenden Bereiche der Oberfläche mit entsprechenden Klingenvorrichtungen erreicht.

In diesem Zusammenhang einsetzbare Beschichtungszusammensetzungen (auch genannt Lacke), so genannte Abziehlacke (auch genannt Maskenlacke), sind hinreichend bekannt und sind beispielsweise in US 3,661,840, US 3,544,400 oder auch WO97/35932 beschrieben. Nach der EN ISO 4618:2006 (Stand April 2007) ist ein Abziehlack definiert als ein Beschichtungsstoff, der durch Abziehen von einem Substrat wieder entfernt werden kann, auf das er als zeitweiliger Schutz aufgetragen wurde. Dementsprechend ist eine Abziehlackschicht eine Beschichtung, die durch Abziehen von einem Substrat wieder entfernt werden kann. Der Begriff Abziehen beschreibt in diesem Zusammenhang das rückstandslose Entfernen einer Beschichtung von einem Substrat durch Einwirken einer mechanischen Zugkraft.

Entsprechende Anforderungen an einen solchen Maskenlack umfassen also eine angemessene chemische Resistenz gegen Säuren und Basen aus den chemischen Fräsbädern sowie eine kontrollierte Haftung der unter Einsatz des Maskenlacks hergestellten Beschichtung (das heißt Abziehlackschicht), die ein rückstandsfreies Abziehen der Beschichtung ermöglicht. Ein Abziehlack ist also ein Lack beziehungsweise eine Beschichtungszusammensetzung, die die vorgenannten Eigenschaften aufweist, das heißt in diesem Sinne geeignet ist. Die individuelle Einstellung entsprechender Lacke und die Anpassung an die Umstände des Einzelfalls, beispielsweise an die Art des Substrats oder die Art des zu verwendenden chemischen Fräsbads, sind dem Fachmann problemlos möglich und können durch wenige zielgerichtete Versuche realisiert werden. Weitere Informationen sind zudem der nachstehenden Beschreibung zu entnehmen.

Ein allerdings nach wie vor bestehendes Problem von Abziehlacken beziehungsweise von daraus hergestellten Beschichtungen und entsprechenden Fräsverfahren liegt in der Genauigkeit und Selektivität des Fräsens. Das Hauptproblem besteht darin, dass die nach dem Einschneiden vorhandenen Schnitte eine sehr schlechte Sichtbarkeit aufweisen. Dadurch ist die Einhaltung der vorgegebenen Ausschneidformen und insbesondere das aufeinander Zuführen von Schnittkanten stark erschwert. Teils wird versucht, dem Problem durch eine bestimmte Farbgebung des Abziehlacks und damit der Beschichtung zu begegnen. Dies hat sich aber als nicht ausreichend erwiesen.

### Aufgabe

Der vorliegenden Erfindung lag daher die Aufgabe zugrunde, die zuvor beschriebenen Nachteile des Standes der Technik zu beseitigen. Es sollte die Möglichkeit geschaffen werden, im Rahmen des chemischen Fräsens von metallischen Substraten die Genauigkeit und Selektivität dieses Verfahrens durch die bessere Sichtbarkeit von Schnittkanten in den dabei eingesetzten Abziehlackschichten zu erhöhen.

### Lösung

Der Gegenstand der vorliegenden Anmeldung ist definiert in den anhängenden Ansprüchen 1-14. Demgemäss wurde ein neues Verfahren zur Herstellung einer abziehbaren Beschichtung auf metallischen Substraten gefunden, umfassend
(1) Bereitstellung eines metallischen Substrats,
(2) Aufbringen eines Abziehlacks auf das metallische Substrat, und
(3) Härtung des unter (2) aufgebrachten Abziehlacks,
dadurch gekennzeichnet, dass
der Abziehlack Mikrohohlkugel enthält.

Das neue Verfahren ist Gegenstand der vorliegenden Erfindung. Bevorzugte Ausführungsformen gehen aus der folgenden Beschreibung und den Unteransprüchen hervor. Gegenstand der vorliegenden Erfindung ist auch eine auf einem metallischen Substrat angeordnete abziehbare Beschichtung, die nach dem Verfahren hergestellt wurde. Ebenso Gegenstand der vorliegenden Erfindung ist ein Verfahren zum chemischen Fräsen von metallischen Substraten, bei dem
(A) eine wie oben beschriebene abziehbare Beschichtung auf einem metallischen Substrat hergestellt wird,
(B) das metallische Substrat durch teilweises Abziehen der unter (A) hergestellten abziehbaren Beschichtung teilweise demaskiert wird, und
(C)der unter (B) erhaltene Aufbau in ein chemisches Fräsbad eingetaucht und chemisch gefräst wird.

Ebenso Gegenstand der vorliegenden Erfindung ist somit auch ein nach dem Verfahren chemisch gefräster Aufbau sowie die Verwendung eines Abziehlacks enthaltend Mikrohohlkugeln im Rahmen des chemischen Fräsens von metallischen Substraten.

Die abziehbare Beschichtung lässt sich auf sehr genaue und selektive Weise vom metallischen Substrat abziehen. Denn entsprechend eingebrachte Schnittkanten in der abziehbaren Beschichtung sind ausgesprochen gut sichtbar und lassen demnach das entsprechend genaue und selektive Einbringen von Schnitten und Schnittformen zu.

### Beschreibung der Erfindung

In Schritt (1) des Verfahrens zur Herstellung einer abziehbaren Beschichtung auf metallischen Substraten wird ein metallisches Substrat bereitgestellt.

Als metallische Substrate kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Substrate aus Aluminium und/oder Aluminiumlegierungen, insbesondere die bekannte Legierung Aluminium 2024. Die Substrate können an sich beliebig geformt sein, das heißt es kann sich beispielsweise um einfache Bleche oder auch um komplexe Bauteile wie insbesondere Aluminiumbauteile beziehungsweise Bauteile aus Aluminumlegierungen aus dem Flugzeugbau handeln.

In Schritt (2) wird ein Abziehlack auf das metallische Substrat aufgebracht. Der Abziehlack wird direkt auch das Substrat aufgebracht. Das heißt zwischen der letztlich resultierenden Abziehlackschicht und dem Substrat sind keine weiteren Schichten angeordnet, sondern die Abziehlackschicht und das Substrat stehen in direktem Kontakt zueinander.

Wichtig ist neben der Tatsache, dass Mikrohohlkugeln enthalten sind, also nur, dass die als Abziehlack bezeichnete Beschichtungszusammensetzung als eben solcher Abziehlack geeignet ist, demnach also die bereits eingangs beschriebenen Eigenschaften aufweist. Der Lack muss also ausgestaltet sein, dass die unter Einsatz des Abziehlacks hergestellten Abziehlackschichten eine angemessene chemische Resistenz gegen Säuren und Basen aus den Fräsbädern sowie eine kontrollierte Haftung auf metallischen Substraten, die ein rückstandsfreies Abziehen der Lackschicht ermöglichen, aufweisen. Solche Lacke und die darin enthaltenen Komponenten sind dem Fachmann gut bekannt.

Der Abziehlack kann durch die dem Fachmann bekannten Methoden zur Applikation von Beschichtungszusammensetzungen aufgebracht werden, beispielsweise durch Tauchen, Rakeln, Spritzen oder Walzen. Aus den genannten Methoden folgt, dass der Abziehlack bevorzugt eine bei Verarbeitungstemperatur fließfähige Beschichtungszusammensetzung ist. Denn die genannten Methoden sind für entsprechende Zusammensetzung vorgesehen. Bevorzugt ist also insbesondere, dass der Abziehlack bei Standardbedingungen (25°C, 1,013 bar) fließfähig ist. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen).

In Schritt (3) des Verfahrens wird der in Schritt (2) aufgebrachte Abziehlack gehärtet. Unter Härtung eines aufgebrachten Lacks beziehungsweise einer Lackschicht ist bekanntermaßen die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit Härtungsbedingungen seine Eigenschaften wie Härte oder Haftung auf dem Untergrund nicht mehr wesentlich ändert.

Die Härtung erfolgt jeweils angepasst an den im Einzelfall gewählten Abziehlack. Eine solche Anpassung kann vom Fachmann problemlos durchgeführt werden. Im Fall von im Rahmen der vorliegenden Erfindung grundsätzlich bevorzugten physikalisch und/oder thermisch-chemisch härtbaren Abziehlacken, besonders bevorzugt thermisch-chemisch härtbaren Abziehlacken, kann eine Härtung damit bekanntermaßen beispielsweise bei Temperaturen von 15 bis 250°C für eine Dauer von beispielsweise 5 Minuten bis zu mehreren Tagen, beispielsweise 7 Tagen, erfolgen. Temperatur und Dauer der Härtung sind bekanntlich von vielen im Einzelfall anzupassenden Faktoren abhängig, beispielsweise davon, ob es sich um thermisch-chemisch härtbare Einkomponenten-Systeme oder Zweikomponenten-Systeme handelt. Vor der Härtung kann der aufgebrachte Abziehlack natürlich auch auf bekannte Weise abgelüftet oder zwischengetrocknet werden.

Der Auftrag des Abziehlacks erfolgt so, dass die Abziehlackschicht nach der Härtung eine Trockenschichtdicke von beispielsweise 50 bis 800 Mikrometern, bevorzugt 100 bis 600 Mikrometern aufweist. Eine Schichtdickenbestimmungen kann mittels eines modularen Schichtdicken-Mess-Systems von Qnix®8500 durchgeführt werden.

Bevorzugt ist offensichtlich, dass neben der Abziehlackschicht keine weitere Beschichtungsmittelzusammensetzung aufgebracht wird. Im Rahmen des Verfahrens werden also bevorzugt einschichtig beschichtete Metallsubstrate hergestellt.

Der im Rahmen des Verfahrens einzusetzende Abziehlack enthält Mikrohohlkugeln, kann jedoch ansonsten frei gewählt werden und an die Umstände des Einzelfalls angepasst werden.

Wichtig ist neben der Tatsache, dass Mikrohohlkugeln enthalten sind, also nur, dass die als Abziehlack bezeichnete Beschichtungszusammensetzung als eben solcher Abziehlack geeignet ist, demnach also die bereits eingangs beschriebenen Eigenschaften aufweist. Der Lack muss also ausgestaltet sein, dass die unter Einsatz des Abziehlacks hergestellten Abziehlackschichten eine angemessene chemische Resistenz gegen Säuren und Basen aus den Fräsbädern sowie eine kontrollierte Haftung auf metallischen Substraten, die ein rückstandsfreies Abziehen der Lackschicht ermöglichen, aufweisen. Solche Lacke und die darin enthaltenen Komponenten sind dem Fachmann gut bekannt.

In der Regel enthält ein Abziehlack jedenfalls mindestens ein organisches Polymer als Bindemittel. Diese organischen Polymere sind beispielsweise, aber nicht ausschließlich, die dem Fachmann bekannten Polyurethan-, Polyester-, Polyether-, Alkyd-, Polystyrol-, Epoxidharze sowie Mischpolymere der genannten Harze. Ebenfalls möglich ist der Einsatz von an sich bekannten Polyacrylat- und Polymethacrylatharzen (im Folgendem als Poly(meth)acrylatharze bezeichnet). Selbiges gilt für Polymere aus der Gruppe der Polystyrol-Alkylen-Copolymere sowie der Polyethylen- und/oder Polypropylen-Homopolymerisate und -Copolymerisate.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommt insbesondere die thermisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel sind bekannt.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird. Solche Beschichtungsmittel werden in der Regel als Einkomponenten-Beschichtungsmittel formuliert.

Im Rahmen der vorliegenden Erfindung bedeutet "thermisch-chemisch härtbar" beziehungsweise der Begriff "thermisch-chemische Härtung", dass die Zusammensetzung, initiiert durch chemische Reaktion von reaktiven funktionellen Gruppen, vernetzten beziehungsweise härten kann, wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt. Ebenfalls der thermisch-chemischen Härtung zuzuordnen ist die oxidative Härtung von an sich bekannten Alkydharzen.

Bevorzugt handelt es sich bei dem Abziehlack um thermisch-chemisch härtbare Beschichtungszusammensetzungen. Möglich sind die grundsätzlich bekannten Beschichtungsmittelzusammensetzungen, die selbstvernetzend und/oder fremdvernetzend sind. Selbstvernetzende Systeme werden in der Regel als Einkomponenten-Systeme formuliert. Besonders bevorzugt sind thermisch-chemisch härtbare Beschichtungsmittelzusammensetzungen, die fremdvernetzend sind. Unter letzteren sind beispielsweise die an sich bekannten Einkomponenten- und Zweikomponenten-Systeme möglich.

Demzufolge enthalten die Abziehlacke bevorzugt ein (erstes) Polymer als Bindemittel, welches bestimmte funktionelle Gruppen, beispielsweise Hydroxylgruppen, enthält, sowie ein an sich bekanntes Vernetzungsmittel, beispielsweise ein Polyisocyanat und/oder Melaminharz, wobei dann Bindemittel und Vernetzungsmittel miteinander thermisch-chemisch härten können. Selbstverständlich gehören die Vernetzungsmittel ebenfalls zum nicht-flüchtigen Anteil des Lacks ohne Pigmente und Füllstoffe und gehören damit im Sinne der einschlägigen Normen ebenfalls zum Bindemittelanteil. Selbiges gilt für Additive wie beispielsweise Netz- und/oder Dispergiermittel, Entschäumer, Verlaufsadditive, Rheologieadditive oder Katalysatoren, soweit diese unter den Bedingungen zur Bestimmung des Bindemittelgehalts nicht flüchtig sind. Die im Rahmen der vorliegenden Erfindung verwendete Terminologie "Polymer als Bindemittel" und "Vernetzungsmittel" ist lediglich der besseren Übersichtlichkeit halber gewählt.

In entsprechenden Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C miteinander reagieren, das heißt Härtungsreaktionen eingehen. Als beispielhafte Kombination seien hydroxyfunktionelle Polyester und/oder Polyurethane mit Melaminharzen und/oder blockierten Polyisocyanaten als Vernetzungsmittel genannt.

In entsprechenden Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C miteinander reagieren. Als beispielhafte Kombination seien hydroxyfunktionelle Polyester und/oder Polyurethane und/oder Poly(meth)acrylate (in der Stammlackkomponente) mit freien Polyisocyanaten als Vernetzungsmittel (in der Härterkomponente) genannt.

Selbstverständlich wird bei der Härtung eines als thermisch-chemisch härtbar gekennzeichnetes Beschichtungsmittel immer auch eine physikalische Härtung, das heißt eine Verschlaufung von Polymerketten, auftreten. Trotzdem wird ein solches Beschichtungsmittel dann als thermisch-chemisch bezeichnet.

Aus Obigem folgt, dass die eingesetzten Abziehlacke bevorzugt solche der oben genannten organischen Polymere als Bindemittel enthalten, die funktionelle Gruppen zur chemischen Vernetzung enthalten. Bevorzugt sind dabei Hydroxylgruppen. Ebenfalls folgt aus Obigem, dass bevorzugt mindestens Vernetzungsmittel enthalten ist, wobei Polyisocyanate enthaltend freie oder blockierte Isocyanatgruppen bevorzugt sind.

Nochmals bevorzugter sind thermisch-chemisch härtbare Zweikomponenten-Abziehlacke, die mindestens ein hydroxyfunktionelles Polymer als Bindemittel, insbesondere mindestens ein hydroxyfunktionelles Polyurethan-, Polyester-, Polyether-, Polystyrol-, Poly(meth)-acrylat-, Epoxidharz und/oder Mischpolymer der genannten Harze, in der Stammlackkomponente enthalten und mindestens ein Polyisocyanat enthaltend freie Isocyanatgruppen in der Härterkomponente enthalten. Solche Abziehlacke haben sich in der Vergangenheit hinsichtlich der chemischen Resistenz und kontrollierten Abziehbarkeit bewährt.

Bereits weiter oben ist auf die Eigenschaften eines Abziehlacks und der daraus hergestellten Beschichtungen, insbesondere auf das rückstandfrei mögliche Abziehen solcher Beschichtungen von Metallsubstraten, verwiesen. Das Erreichen dieser Abziehbarkeit beziehungsweise einer entsprechend kontrollierten Haftung ist auf unterschiedliche, an sich bekannte Weise zu erreichen.

Im Rahmen der vorliegenden Erfindung bevorzugte Möglichkeiten, die zu einer guten Eignung als Abziehlack führen, sind in der Folge ausgeführt.

Zum einen ist es möglich, organische Polymere als Bindemittel einzusetzen, die aufgrund ihrer physikochemischen Eigenschaften zu Beschichtungen mit entsprechend niedriger Haftung führen, sodass diese abziehbar sind. Beispielhaft sei auf Polystyrol-Alkylen-Copolymere, Polyethylen- und/oder Polypropylen-Homopolymerisate und -Copolymerisate als Bindemittel verwiesen, welche in diesem Sinne auch bevorzugt sind.

Möglich ist auch, thermisch-chemisch härtbare Zweikomponenten-Lacke einzusetzen, die durch die enthaltenen Polymere als Bindemittel sowie ebenfalls einzusetzende Vernetzungsmittel eine sehr kurze Topfzeit aufweisen. Solche Systeme härten dann nach dem Aufbringen auf ein Substrat sehr schnell aus, ohne eine besonders ausgeprägte Haftung zum Substrat auszubilden. Besonders bevorzugt in diesem Sinne sind thermisch-chemisch härtbare Zweikomponenten-Abziehlacke, die mindestens ein hydroxyfunktionelles Polymer als Bindemittel sowie ein organisches Diamin, bevorzugt ein aromatisches Diamin, in der Stammlackkomponente enthalten und mindestens ein Polyisocyanat enthaltend freie Isocyanatgruppen in der Härterkomponente enthalten.

Eine weitere, alternative oder zusätzliche Möglichkeit zu den beiden oben genannten Möglichkeiten liegt im Einsatz von an sich bekannten Antihaftmitteln. Es handelt sich um grundsätzlich kommerziell verfügbare Additive, die die starke Haftung auf verschiedenen Untergründen vermindern können. Es handelt sich beispielsweise um Fettsäureester oder Silikonöle. Möglich sind auch an sich bekannte Mischsalze von Aminocarbonsäuren, beispielsweise ein Natrium-/Triethylammoniumsalz einer Aminocarbonsäure. Beispielhaft sei auf die kommerziell verfügbaren Produkte Additol VXL 1105, Additol XW 6568 oder Additol VXL 6383 verwiesen. In diesem Sinne bevorzugt ist es, wenn der Abziehlack eine Menge von 1 bis 5 Gew.-%, bezogen auf die Gesamtmenge des Abziehlacks, mindestens eines Antihaftmittels enthält.

Bevorzugt ist also, dass der Abziehlack (i) mindestens ein Polymer als Bindemittel ausgewählt aus der Gruppe der Polystyrol-Alkylen-Copolymere, Polyethylen- und/oder Polypropylen-Homopolymerisate und -Copolymerisate enthält oder (ii) ein thermisch-chemisch härtbarer Zweikomponenten-Abziehlack ist, der mindestens ein hydroxyfunktionelles Polymer als Bindemittel sowie ein organisches Diamin, bevorzugt ein aromatisches Diamin, in der Stammlackkomponente enthält und mindestens ein Polyisocyanat enthaltend freie Isocyanatgruppen in der Härterkomponente enthält. Da im Rahmen der vorliegenden Erfindung grundsätzlich thermisch-chemisch härtbare Zweikomponenten-Abziehlacke bevorzugt sind, ist die Alternative (ii) nochmals bevorzugt.

In einer weiteren bevorzugten Ausführungsform, die gegebenenfalls auch mit den vorgenannten Ausführungen (i) und (ii) kombiniert werden kann, enthält der Abziehlack eine Menge von 1 bis 5 Gew.-%, bezogen auf die Gesamtmenge des Abziehlacks, mindestens eines Antihaftmittels.

Als weitere Bestandteile kann der Abziehlack beispielsweise Pigmente, Füllstoffe und Lösemittel wie organische Lösemittel und/oder Wasser sowie weitere typische Lackadditive wie Entlüftungsmittel, rheologische Additive wie Thixotropierungsmittel, Katalysatoren und Molekularsiebe enthalten.

Es ist erfindungswesentlich, dass der Abziehlack Mikrohohlkugeln enthält.

Solche Mikrohohlkugeln sind an sich bekannt. Es handelt sich um so genannte Leichtfüllstoffe, wobei die Kugeln mit beispielsweise Luft, Stickstoff oder Kohlendioxid gefüllt sind. Die Kugelschalen umfassen beispielsweise Gläser wie Borosilikatgläser, Silikate wie Aluminiumsilikate, Siliciumdioxid, Keramiken und/oder auch Kunststoffe wie Plastomere, beispielsweise Plastomere auf Styrol- und/oder Poly(meth)acrylatbasis oder auch Acrylnitril-basierte Polymere wie Polyacrylnitril-Methylmethacrylat-Copolymere oder Polyacrylnitril-Polymere. Natürlich sind auch Mischungen unterschiedliche Schalenmaterialien möglich.

Der Teilchendurchmesser (D50-Wert, volumenbezogen) der Mikrohohlkugel liegt beispielsweise von 5 bis 200 Mikrometern, bevorzugt von 20 bis 120 Mikrometern (ermittelt über die Laserlichtbeugung gemäß ISO 13320:2009-10)

Entsprechende Mikrohohlkugeln können von unterschiedlichen Anbietern kommerziell erhalten werden, beispielsweise unter den Handelsbezeichnungen Expancel DE (Fa. AkzoNobel), 3M Glass Bubbles (Fa. 3M) oder Dualite E (Fa. Henkel) und können ohne weiteres in dem Abziehlack eingesetzt werden.

Der Anteil der Mikrohohlkugel beträgt beispielsweise von 0,05 bis 30 Gew.-%, bevorzugt 1 bis 20 Gew.-%, jeweils bezogen auf die Gesamtmenge des Abziehlacks. Die Menge ist beispielsweise abhängig von unterschiedlichen Eigenschaften des jeweils eingesetzten Abziehlacks, beispielsweise von der Farbe des Abziehlacks und kann je nach Einzelfall variiert werden.

Die Mikrohohlkugeln können dem ansonsten vollständig formulierten Abziehlack in der gewünschten Menge problemlos beigegeben werden und dann untergemischt werden. Genauso möglich ist es natürlich, die Mikrohohlkugel bereits vorher, das heißt vor Fertigstellung der ansonsten vollständigen Formulierung, beizumischen. In Zweikomponenten-Systemen können die Mikrohohlkugeln beispielsweise auch der Stammlackkomponente beigemischt werden und dann mit der Härterkomponente vermischt werden.

Der Festkörpergehalt (auch genannt Festkörper oder nicht-flüchtiger Anteil) des Abziehlacks ohne Mikrohohlkugeln (oM) kann je nach Einzelfall in weiten Grenzen variieren. Er beträgt beispielsweise von 10 bis zu 100 %, bevorzugt 20 bis zu 100 %, nochmals bevorzugt von 40 bis zu 100 %. Es kann sich also um ein lösemittelfreies oder annähernd lösemittelfreies System handeln oder der Lack kann signifikante Mengen an Wasser oder organischen Lösemitteln enthalten (das heißt der Lack kann wässrig oder lösemittelbasiert sein).

Der Festkörper wird nach ISO 3251:2008 bestimmt, indem 1 g des Abziehlacks für 60 min bei 105 °C getrocknet wird. Der nach Trocknung verbleibende nichtflüchtige Anteil wird zur Einwaage ins Verhältnis gesetzt und gibt den prozentualen Festkörper des Abziehlacks an.

Der Bindemittelanteil am Festkörper des Abziehlacks beträgt beispielsweise von 45 bis 95 %, bevorzugt 50 bis 95 %, nochmals bevorzugt 70 bis 95 % (bestimmt nach dem Extraktionsverfahren nach Soxhlet (ISO 13944:2012; November 2012)). Demzufolge beträgt der Anteil an Pigmenten und Füllstoffen am Festkörper des Abziehlacks beispielsweise von 5 bis 55 %, bevorzugt 5 bis 50 %, nochmals bevorzugt 5 bis 30 %.

Der Gehalt an organischen Lösemitteln am Abziehlack beträgt bevorzugt weniger als 500 g/l, nochmals bevorzugt weniger als 300 g/l, ganz besonders bevorzugt weniger als 200 g/l (Gramm Lösemittel pro Liter Lack).

Der Anteil organischer Lösemittel kann durch Berücksichtigung der Masse organischer Lösemittel und dem Volumen der Beschichtungszusammensetzung eingestellt beziehungsweise bestimmt werden.

Die Dichte des Abziehlacks liegt beispielsweise im Bereich von 1,05 bis 1,7 g/l.

Weiterhin Gegenstand der vorliegenden Erfindung ist ein Verfahren zum chemischen Fräsen von metallischen Substraten, bei dem
(A) eine wie oben beschriebene abziehbare Beschichtung auf einem metallischen Substrat hergestellt wird,
(B) das metallische Substrat durch teilweises Abziehen der unter (A) hergestellten abziehbaren Beschichtung teilweise demaskiert wird, und
(C)der unter (B) erhaltene Aufbau in ein chemisches Fräsbad eingetaucht und chemisch gefräst wird.

Der oben genannte Schritt (A) des Verfahrens zum chemischen Fräsen umfasst also die erfindungswesentlichen Schritte (1) bis (3) des weiter oben beschriebenen Verfahrens zur Herstellung einer abziehbaren Beschichtung auf metallischen Substraten. Für das Verfahren zum chemischen Fräsen gelten zudem alle oben genannten bevorzugten Ausführungsformen hinsichtlich des Verfahrens zur Herstellung einer abziehbaren Beschichtung sowie hinsichtlich des Abziehlacks.

In Schritt (A) des Verfahrens zum chemischen Fräsen wird also eine abziehbare Beschichtung auf einem metallischen Substrat hergestellt.

In Schritt (B) des Verfahrens wird das metallische Substrat durch teilweises Abziehen der abziehbaren Beschichtung teilweise demaskiert.

Nach Beendigung des Schritts (B) liegt also ein bestimmter Anteil der Substratoberfläche frei, ist also nicht mehr von einer Beschichtung bedeckt. Der Restanteil der Oberfläche ist aber selbstverständlich nach wie vor von der abziehbaren (aber nicht abgezogenen) Beschichtung bedeckt.

Der Demaskierungsschritt (B) umfasst dabei bevorzugt das Einschneiden der abziehbaren Beschichtung. Die Beschichtung wird also durch Aufsetzen eines Schneidgeräts, beispielsweise einem Cuttermesser oder einem Skalpell, und anschließendes Einschneiden und gegebenenfalls Ausschneiden bestimmter Formen, gegebenenfalls unter Verwendung von Hilfsmitteln wie Schnittschablonen oder Lineal, so vorbereitet, dass ein Teil der Beschichtung abgezogen werden kann. Das Einbeziehungsweise Ausschneiden kann natürlich auch von automatisierten Schneidanlagen ausgeführt werden. Anschließend wird der abzuziehende Teil der Beschichtung mit Hilfe geeigneten Equipments oder der Hand von der Substratoberfläche abgezogen.

In Schritt (C) des Verfahrens folgt dann das Eintauchen in ein chemisches Fräsbad und das chemische Fräsen des nach Schritt (B) erhaltenen Aufbaus, das heißt dem teilweise beschichteten metallischen Substrat.

Entsprechende chemische Fräsbäder können beispielsweise sauer oder alkalisch sein. So können im Rahmen der vorliegenden Erfindung saure chemische Fräsbäder mit einem pH-Wert von weniger als 7, bevorzugt weniger als 6, ganz besonders bevorzugt -1 bis 5 oder alkalische chemische Fräsbäder mit einem pH-Wert von größer 7, bevorzugt größer 8, ganz besonders bevorzugt 9 bis 15, eingesetzt werden.

Als Säuren oder Basen können die an sich bekannten Komponenten, insbesondere anorganischen Komponenten wie Salzsäure, Salpetersäure, Schwefelsäure und/oder Fluorwasserstoffsäure oder Natriumhydroxid und/oder Alkalialuminat-haltige Alkalilaugen eingesetzt werden.

Nach dem Eintauchen wird der Aufbau chemisch gefräst. Dabei wird letztlich der Aufbau einfach für eine gewisse Zeit im chemischen Fräsbad eingetaucht gehalten, beispielsweise für eine Dauer von 1 Minute bis zu mehreren Stunden wie 10 Stunden, je nach gewähltem chemischen Fräsbad und gewünschter Menge von abzufräsendem Metall. Das Fräsen kann bei Temperaturen im Bereich zwischen 10 und 30°C, aber auch bei höheren Temperaturen von 30 bis 100°C durchgeführt werden.

Bevorzugte saure chemische Fräsbäder enthalten 20 bis 40 %ige Salpetersäure (Gew.-%), wobei übliche Fräszeiten im Bereich von 5 bis 30 Minuten liegen.

Bevorzugte alkalische chemische Fräsbäder enthalten 10 bis 40 %ige Natronlauge (Gew.-%), wobei übliche Fräszeiten im Bereich von 5 bis 240 Minuten liegen.

Nach Abschluss des chemischen Fräsens wird der Aufbau aus dem chemischen Fräsbad entfernt und im Anschluss daran in der Regel gereinigt, wobei Reste der Fräslösung vom Bauteil entfernt werden (Schritt (D)). Dies erfolgt in der Regel mit einer Spüllösung, beispielsweise Wasser. Die Reinigung kann durch das aktive Abspülen oder Abspritzen, aber auch durch Eintauchen in ein entsprechendes Reinigungsbad erfolgen.

Natürlich können die grundsätzlichen Schritte (B) und (C) (sowie (D)), je nach Einzelfall, mehrfach wiederholt werden, wobei dann selbstverständlich im ersten Widerholungsschritt (B) das nach der ersten Durchführung des erfindungsgemäßen Fräsverfahrens erhaltene gefräste Substrat eingesetzt wird. In dem Wiederholungsschritt (B) kann dann ein weiterer Teil des Substrats demaskiert werden. Wird der Aufbau dann im Widerholungsschritt (C) in ein chemisches Fräsbad getaucht und chemisch gefräst, erhält man danach einen Aufbau, der zwei unterschiedlich intensiv gefräste Oberflächenanteile enthält, während der gegebenenfalls nach wie vor noch unter der Beschichtung liegende Anteil noch nicht gefräst ist. Nach gegebenenfalls mehrfachem Abziehen und Fräsen und schlussletztlichem Abziehen des letzten Anteils der Beschichtung und gegebenenfalls einem dann noch folgenden letzten Frässchritt erhält man dann ein metallisches Substrat, welches auf unterschiedlichen Oberflächenbereichen unterschiedlich intensiv gefräst ist.

Die letztlich resultierenden metallischen Substrate weisen sehr genau gefräste Bereiche auf, da durch den Einsatz des oben beschriebenen Abziehlacks und die demzufolge gute Sichtbarkeit von Schnittkanten sehr genau und selektiv gefräst werden kann.

### Beispiele

Es wurden verschiedene Abziehlacke hergestellt, welche unterschiedliche Arten und Mengen von handelsüblichen Mikrohohlkugel enthalten. Als Mikrohohlkugel kamen folgende Produkte zum Einsatz. Hohlkugel 3 M Scotch (Glas, Mikrohohlkugeln 1), Leichtfüllstoff P (Keramik, Mikrohohlkugeln 2), Expancel (Polyacrylnitril-Methylmethacrylat-Copolymer, Mikrohohlkugeln 3), Dualite E130 - 095 D (Polyacrylnitril, Mikrohohlkugeln 4). Unter Einsatz dieser Abziehlacke wurden dann Aluminiumprüfbleche der Legierung 2024, unplattiert, beidseitig beschichtet. Dazu wurden die Abziehlacke über eine gängige Hochdruckspritzanlage appliziert und anschließend bei jeweils angemessenen Bedingungen gehärtet. Die Trockenschichtdicken lagen im Bereich von 250 bis 450 Mikrometern. Danach wurden in alle Beschichtungen mit einem Cuttermesser Schnitte eingebracht und visuell hinsichtlich ihrer Sichtbarkeit bewertet.

In der Folge sind die bewerteten Abziehlacke aufgeführt (Angabe der Anteile von Mikrohohlkugeln und Abziehlacken oM (ohne Mikrohohlkugeln) in Gewichtsprozent). Die Abziehlacke 2 bis 8 und 10 enthielten zudem eine Menge von 3 Gew.-% eines handelsüblichen Antihaftmittels. Ebenfalls angegeben ist die Qualität der Sichtbarkeit von Schnitten (+ = gute Sichtbarkeit, o = mittelmäßige, grundsätzlich nicht mehr ausreichende Sichtbarkeit, - = sehr schlechte/ungenügende Sichtbarkeit).

Abziehlack 1 oM (ohne Mikrohohlkugeln): Thermisch-chemisch härtbarer Zweikomponenten-Abziehlack auf Basis von hydroxyfunktionellem Polyoxyethylenglykol als Bindemittel und aromatischen Polyisocyanaten enthaltend freie Isocyanatgruppen als Vernetzungsmittel.

Der Abziehlack 1 oM besitzt einen Gehalt an organischen Lösemittel von 1 g/l, einen Festkörper von 99,9 %, einen Bindemittelanteil am Festkörper von 92,1 % und damit einen Anteil an Pigmenten und Füllstoffen am Festkörper von 7,9 %. Die Dichte beträgt 1,1 g/l.

Der Abziehlack 1 oM wurde mit unterschiedlichen Arten und Mengen von handelsüblichen Mikrohohlkugeln versetzt (siehe Tabelle 1). Tabelle 1 zeigt auch die Ergebnisse der Bewertung hinsichtlich der Sichtbarkeit von Schnitten.

**Tabelle 1**

| | | | | | | | | | | | |
|---|---|---|---|---|---|---|---|---|---|---|---|
| Abziehlack 1 oM | 100 | 99,9 | 99 | 90 | 80 | 99,9 | 99 | 90 | 80 | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | - | O | + | + | + | O | + | + | + | | |
| | | | | | | | | | | | |
| Abziehlack 1 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | o | o | + | + | + | + | o | o | + | + |

Abziehlack 2 oM (ohne Mikrohohlkugeln): Thermisch-chemisch härtbarer, lösemittelbasierter Zweikomponenten-Abziehlack auf Basis von hydroxyfunktionellem Polyacrylatharz als Bindemittel und aliphatischen Polyisocyanaten enthaltend freie Isocyanatgruppen als Vernetzungsmittel.

Der Abziehlack 2 oM besitzt einen Gehalt an organischen Lösemittel von 250 g/l, einen Festkörper von 65,0 %, einen Bindemittelanteil am Festkörper von 76,9 % und damit einen Anteil an Pigmenten und Füllstoffen am Festkörper von 23,1 %. Die Dichte beträgt 1,4 g/l.

Der Abziehlack 2 oM wurde mit unterschiedlichen Arten und Mengen von handelsüblichen Mikrohohlkugeln versetzt (siehe Tabelle 2). Tabelle 2 zeigt auch die Ergebnisse der Bewertung hinsichtlich der Sichtbarkeit von Schnitten.

**Tabelle 2**

| | | | | | | | | | | | |
|---|---|---|---|---|---|---|---|---|---|---|---|
| Abziehlack 2 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| Sichtbarkeit von Schnitten in der Beschichtung | - | + | + | + | + | + | + | + | + | | |
| | | | | | | | | | | | |
| Abziehlack 2 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | - | o | + | + | + | + | o | + | + | + |

Abziehlack 3 oM (ohne Mikrohohlkugeln): Thermisch-chemisch härtbarer, wässriger Zweikomponenten-Abziehlack auf Basis von hydroxyfunktionellem Polyacrylatharz als Bindemittel und aliphatischen Polyisocyanaten enthaltend freie Isocyanatgruppen als Vernetzungsmittel.

Der Abziehlack 3 oM besitzt einen Gehalt an organischen Lösemittel von 120 g/l, einen Festkörper von 84,4 %, einen Bindemittelanteil am Festkörper von 53,3 % und damit einen Anteil an Pigmenten und Füllstoffen am Festkörper von 46,7 %. Die Dichte beträgt 1,3 g/l.

Der Abziehlack 3 oM wurde mit unterschiedlichen Arten und Mengen von handelsüblichen Mikrohohlkugeln versetzt (siehe Tabelle 3). Tabelle 3 zeigt auch die Ergebnisse der Bewertung hinsichtlich der Sichtbarkeit von Schnitten.

**Tabelle 3**

| | | | | | | | | | | | |
|---|---|---|---|---|---|---|---|---|---|---|---|
| Abziehlack 3 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| Sichtbarkeit von Schnitten in der Beschichtung | - | + | + | + | + | + | + | + | + | | |
| | | | | | | | | | | | |
| Abziehlack 3 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | + | + | + | + | + | + | + | + | + | + |

Abziehlack 4 oM (ohne Mikrohohlkugeln): Thermisch-chemisch härtbarer, lösemittelbasierter Zweikomponenten-Abziehlack auf Basis von hydroxyfunktionellem Polyesterharz als Bindemittel und aliphatischen Polyisocyanaten enthaltend freie Isocyanatgruppen als Vernetzungsmittel.

Der Abziehlack 4 oM besitzt einen Gehalt an organischen Lösemittel von 250 g/l, einen Festkörper von 65,0 %, einen Bindemittelanteil am Festkörper von 84,6 % und damit einen Anteil an Pigmenten und Füllstoffen am Festkörper von 15,4 %. Die Dichte beträgt 1,4 g/l.

Der Abziehlack 4 oM wurde mit unterschiedlichen Arten und Mengen von handelsüblichen Mikrohohlkugeln versetzt (siehe Tabelle 4). Tabelle 4 zeigt auch die Ergebnisse der Bewertung hinsichtlich der Sichtbarkeit von Schnitten.

**Tabelle 4**

| | | | | | | | | | | | |
|---|---|---|---|---|---|---|---|---|---|---|---|
| Abziehlack 4 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| Sichtbarkeit von Schnitten in der Beschichtung | - | + | + | + | + | + | + | + | + | | |
| | | | | | | | | | | | |
| Abziehlack 4 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | o | + | + | + | + | + | o | + | + | + |

Abziehlack 5 oM (ohne Mikrohohlkugeln): Physikalisch härtbarer, wässriger Einkomponenten-Abziehlack auf Basis einer wässrigen Dispersion eines Poly(meth)acrylatharzes als Bindemittel.

Der Abziehlack 5 oM besitzt einen Gehalt an organischen Lösemittel von 30 g/l, einen Festkörper von 46,1 %, einen Bindemittelanteil am Festkörper von 65,1 % und damit einen Anteil an Pigmenten und Füllstoffen am Festkörper von 34,9 %. Die Dichte beträgt 1,3 g/l.

Der Abziehlack 5 oM wurde mit unterschiedlichen Arten und Mengen von handelsüblichen Mikrohohlkugeln versetzt (siehe Tabelle 5). Tabelle 5 zeigt auch die Ergebnisse der Bewertung hinsichtlich der Sichtbarkeit von Schnitten.

**Tabelle 5**

| | | | | | | | | | | | |
|---|---|---|---|---|---|---|---|---|---|---|---|
| Abziehlack 5 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | - | + | + | + | + | + | + | + | + | | |
| Abziehlack 5 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | - | o | + | + | + | + | + | + | + | + |

Abziehlack 6 oM (ohne Mikrohohlkugeln): Physikalisch härtbarer, wässriger Einkomponenten-Abziehlack auf Basis einer wässrigen Dispersion eines Polyurethanharzes als Bindemittel.

Der Abziehlack 6 oM besitzt einen Gehalt an organischen Lösemittel von 60 g/l, einen Festkörper von 42,2 %, einen Bindemittelanteil am Festkörper von 71,1 % und damit einen Anteil an Pigmenten und Füllstoffen am Festkörper von 28,9 %. Die Dichte beträgt 1,3 g/l.

Der Abziehlack 6 oM wurde mit unterschiedlichen Arten und Mengen von handelsüblichen Mikrohohlkugeln versetzt (siehe Tabelle 6). Tabelle 6 zeigt auch die Ergebnisse der Bewertung hinsichtlich der Sichtbarkeit von Schnitten.

**Tabelle 6**

| | | | | | | | | | | | |
|---|---|---|---|---|---|---|---|---|---|---|---|
| Abziehlack 6 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | o | + | + | + | + | + | + | + | + | | |
| | | | | | | | | | | | |
| Abziehlack 6 oM | 100 | 99,98 | 99,95 | 99,9 | 99,5 | 99 | 97,5 | 99,9 | 99,5 | 99 | 95 |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | o | + | + | + | + | + | + | + | + | + | + |

Abziehlack 7 oM (ohne Mikrohohlkugeln): Thermisch-chemisch härtbarer, lösemittelbasierter Einkomponenten-Abziehlack auf Basis eines Alkydharzes als Bindemittel.

Der Abziehlack 7 oM besitzt einen Gehalt an organischen Lösemittel von 420 g/l, einen Festkörper von 41,2 %, einen Bindemittelanteil am Festkörper von 85,0 % und damit einen Anteil an Pigmenten und Füllstoffen am Festkörper von 15,0 %. Die Dichte beträgt 1,4 g/l.

Der Abziehlack 7 oM wurde mit unterschiedlichen Arten und Mengen von handelsüblichen Mikrohohlkugeln versetzt (siehe Tabelle 7). Tabelle 7 zeigt auch die Ergebnisse der Bewertung hinsichtlich der Sichtbarkeit von Schnitten.

**Tabelle 7**

| | | | | | | | | | | | |
|---|---|---|---|---|---|---|---|---|---|---|---|
| Abziehlack 7 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | - | + | + | + | + | + | + | + | + | | |
| | | | | | | | | | | | |
| Abziehlack 7 oM | 100 | 99,98 | 99,95 | 99,9 | 99,5 | 99 | 97,5 | 99,9 | 99,5 | 99 | 95 |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| | | | | | | | | | | | |
| Sichtbarkeit von Schnitten in der Beschichtung | - | o | + | + | + | + | + | o | + | + | + |

Abziehlack 8 oM (ohne Mikrohohlkugeln): Thermisch-chemisch härtbarer, wässriger Einkomponenten-Abziehlack auf Basis eines Alkydharzes als Bindemittel.

Der Abziehlack 8 oM besitzt einen Gehalt an organischen Lösemittel von 50 g/l, einen Festkörper von 42,5 %, einen Bindemittelanteil am Festkörper von 70,6 % und damit einen Anteil an Pigmenten und Füllstoffen am Festkörper von 29,4 %. Die Dichte beträgt 1,5 g/l.

Der Abziehlack 8 oM wurde mit unterschiedlichen Arten und Mengen von handelsüblichen Mikrohohlkugeln versetzt (siehe Tabelle 8). Tabelle 8 zeigt auch die Ergebnisse der Bewertung hinsichtlich der Sichtbarkeit von Schnitten.

**Tabelle 8**

| | | | | | | | | | | | |
|---|---|---|---|---|---|---|---|---|---|---|---|
| Abziehlack 8 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | o | + | + | + | + | + | + | + | + | | |
| | | | | | | | | | | | |
| Abziehlack 8 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| Sichtbarkeit von Schnitten in der Beschichtung | o | + | + | + | + | + | + | o | + | + | + |

Abziehlack 9 oM (ohne Mikrohohlkugeln): Physikalisch härtbarer, lösemittelbasierter Einkomponenten-Abziehlack auf Basis eines Polystyrol-Alkylen-Copolymers als Bindemittel.

Der Abziehlack 9 oM besitzt einen Gehalt an organischen Lösemittel von 700 g/l, einen Festkörper von 16,0 %, einen Bindemittelanteil am Festkörper von 50,0 % und damit einen Anteil an Pigmenten und Füllstoffen am Festkörper von 50,0 %. Die Dichte beträgt 1,2 g/l.

Der Abziehlack 9 oM wurde mit unterschiedlichen Arten und Mengen von handelsüblichen Mikrohohlkugeln versetzt (siehe Tabelle 9). Tabelle 9 zeigt auch die Ergebnisse der Bewertung hinsichtlich der Sichtbarkeit von Schnitten.

**Tabelle 9**

| | | | | | | | | | | | |
|---|---|---|---|---|---|---|---|---|---|---|---|
| Abziehlack 9 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | o | + | + | + | + | + | + | + | + | | |
| | | | | | | | | | | | |
| Abziehlack 9 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| Sichtbarkeit von Schnitten in der Beschichtung | o | + | + | + | + | + | + | + | + | + | + |

Abziehlack 10 oM (ohne Mikrohohlkugeln): Thermisch-chemisch härtbarer, lösemittelbasierter Zweikomponenten-Abziehlack auf Basis von hydroxyfunktionellem Epoxidharz als Bindemittel und Polyaminen als Vernetzungsmittel.

Der Abziehlack 10 oM besitzt einen Gehalt an organischen Lösemittel von 250 g/l, einen Festkörper von 67,5 %, einen Bindemittelanteil am Festkörper von 88,9 % und damit einen Anteil an Pigmenten und Füllstoffen am Festkörper von 11,1 %. Die Dichte beträgt 1,3 g/l.

Der Abziehlack 10 oM wurde mit unterschiedlichen Arten und Mengen von handelsüblichen Mikrohohlkugeln versetzt (siehe Tabelle 10). Tabelle 10 zeigt auch die Ergebnisse der Bewertung hinsichtlich der Sichtbarkeit von Schnitten.

**Tabelle 10**

| | | | | | | | | | | | |
|---|---|---|---|---|---|---|---|---|---|---|---|
| Abziehlack 10 oM | 100 | 99,9 | 99 | 90 | 80 | 99,9 | 99 | 90 | 80 | | |
| | | | | | | | | | | | |
| Mikrohohlkugel 1 | | 0,10 | 1,00 | 10,00 | 20,00 | | | | | | |
| Mikrohohlkugel 2 | | | | | | 0,10 | 1,00 | 10,00 | 20,00 | | |
| | | | | | | | | | | | |
| Sichtbarkeit von Schnitten in der Beschichtung | o | + | + | + | + | + | + | + | + | | |
| | | | | | | | | | | | |
| Abziehlack 10 oM | 100 | 99,98 | 99,95 | 99,9 | 99,5 | 99 | 97,5 | 99,9 | 99,5 | 99 | 95 |
| | | | | | | | | | | | |
| Mikrohohlkugel 3 | | 0,02 | 0,05 | 0,10 | 0,50 | 1,00 | 2,50 | | | | |
| Mikrohohlkugel 4 | | | | | | | | 0,10 | 0,50 | 1,00 | 5,00 |
| Sichtbarkeit von Schnitten in der Beschichtung | o | + | + | + | + | + | + | + | + | + | + |

Die Ergebnisse der Tabellen 1 bis 10 zeigen, dass der Einsatz von Mikrohohlkugeln die Sichtbarkeit von Schnitten in den abziehbaren Beschichtungen signifikant verbessert.

Unter Verwendung der oben beschriebenen Abziehlackschichten auf metallischen Substraten wurden zudem eben diese metallischen Substrate chemisch gefräst.

Dazu wurde wie folgt vorgegangen.

Die gehärteten abziehbaren Beschichtungen auf metallischen Substraten wurden zunächst einer Haftzugprüfung unterworfen. Bei dieser Prüfung wird gleichzeitig ein Teilbereich der abziehbaren Beschichtung vom metallischen Substrat entfernt.

Bei der Haftzugprüfung wird ein sogenannter "Haftzugswert" ermittelt. Dieser gibt die Haftzugskraft in Gramm an, die notwendig ist, einen 1 cm breiten Lackstreifen vom Untergrund zu entfernen (durchschnittlich pro abgezogenem Bereich gemessener Wert). Der Wert gibt Aufschluss darüber, wie hoch der Kraftaufwand ist, um ein Bauteil zu demaskieren und wird wie folgt gemessen.

Ein Lackstreifen mit dem Maß 10 x 1 cm wurde mit einer scharfen Klinge angeschnitten. Um diesen Lackstreifen wurde ein Rahmen geschnitten, welcher den Lackstreifen vollumfänglich umrahmt und dessen Seiten etwa 1 bis 2 cm von den Seiten des Lackstreifens entfernt sind. Dieser Rahmen wird dann entfernt (das heißt vom metallischen Substrat abgezogen). Dies dient dazu, dass die eigentliche Testfläche (der Lackstreifen) keinen Kontakt mehr zu der Restbeschichtung aufweisen kann. Denn ein solcher Restkontakt, der beispielsweise auf nicht vollständig durchdringenden Schnittlinien beim Ausschneiden des Lackstreifens beruhen können, würde das Ergebnis der dann folgenden Messung verfälschen. Hiernach werden die ersten 10 mm des verbleibenden Lackstreifens mittels der schon eingesetzten Klinge angehebelt, so dass ein Fixierungspunkt für die später anzuklemmende Federwaage entsteht. An diesen Fixierungspunkt wird nun, um ein Abrutschen der Federwaage zu verhindern, eine Heftklammer quer über die Breite der Fläche aufgebracht. Nun wird an dieser Heftklammer eine zuvor geeichte Federwage mittels Zahnklemme angeklemmt. Anschließend wird die Federwage im 45°-Winkel zum Untergrund ausgerichtet. Sobald die Federwaage den korrekten Winkel eingenommen hat, wird mit der Federwaage der Lackstreifen innerhalb von 3 Sekunden vom Untergrund abgezogen. Parallel hierzu wird die dafür notwendige Kraft auf der Skalierung der Federwaage abgelesen.

Es resultiert ein Aufbau, der ein metallisches Substrat umfasst, welches teilweise demaskiert, teilweise mit einer abziehbaren Beschichtung beschichtet ist (vergleiche Schritt (B) des Verfahrens)

Danach wurde der jeweilige Aufbau vollständig in ein zuvor auf 70°C aufgeheiztes alkalisches chemisches Fräsbad (16 Gew.-% Natriumhydroxid in 84 Gew.-% vollentsalztem Wasser) überführt und dort für 10 Minuten chemisch gefräst (vergleiche Schritt (C) des Verfahrens). Anschließend wurden die Prüfbleche zum Abwaschen der Laugenreste in ein Wasserbad überführt. Die Verweildauer im Wasserbad betrug 2 Minuten.

Zehn Minuten nach dem ersten chemischen Frässchritt wurde erneut auf jeder Prüftafel ein Haftzugswert ermittelt und dabei ein weiterer Bereich des metallischen Substrats demaskiert (Wiederholungsschritt (B)).

Anschließend erfolgte ein zweiter chemischer Frässchritt (Wiederholungsschritt (C)). Die Aufbauten wurden dabei erneut in das bereits beschriebene alkalische chemische Fräsbad überführt und verblieben für 25 bis 30 Minuten im Bad. Nach dieser Zeit erfolgt erneut eine zweiminütige Wässerung im Wasserbad. Im Anschluss an diese Wässerung wurden die Proben für 30 Sekunden aus dem Wasser genommen. Dies simuliert Abtropfprozesse in der späteren Anwendung und dient dazu, kein beziehungsweise nur sehr geringe Mengen Wasser in das folgende Salpetersäurebad einzutragen.

Danach erfolgte ein dritter chemischer Frässchritt (ohne vorheriges Abziehen eines weiteren Bereichs der Beschichtung). Eingesetzt wurde dabei ein saures chemisches Fräsbad (32 Gew.-/ Salpetersäure, 68 Gew.-% vollentsalztes Wasser). Der Aufbau verblieb für 70 Sekunden im chemischen Fräsbad (zweiter Wiederholungsschritt (C)). Danach erfolgte wiederum eine zweiminütige Reinigung im Wasserbad. Vier Minuten nach Verlassen des Wasserbads wurde erneut ein Haftzugwert ermittelt. Ein letzter Haftzugwert wurde 18 Stunden nach der Bestimmung des dritten Werts ermittelt.

Bei allen untersuchten Beschichtungen lagen die jeweils vier ermittelten Haftzugwerte im Bereich von 100 bis 700 g und damit in einem für Abziehlacke gängigen Bereich. Im Übrigen wurde für die jeweils demaskierten und dann gefrästen Bereiche (beziehungsweise deren Grenzlinien zu den noch beschichteten Bereichen) die Unterwanderungsneigung bewertet. Es ergaben sich lediglich geringfügige und diskontinuierlich feststellbare Unterwanderungseinfälle von höchstens 5 mm. Die eingesetzten Abziehlacke weisen also eine angemessene chemische Resistenz gegen Säuren und Basen aus den chemischen Fräsbädern auf.

## Patentansprüche

1. Verfahren zur Herstellung einer abziehbaren Beschichtung auf metallischen Substraten, umfassend
(1) Bereitstellung eines metallischen Substrats,
(2) Aufbringen eines Abziehlacks auf das metallische Substrat, und
(3) Härtung des unter (2) aufgebrachten Abziehlacks,
**dadurch gekennzeichnet, dass**
der Abziehlack Mikrohohlkugel enthält, und wobei der Abziehlack ein Abziehlack wie definiert in EN ISO 4618: 2006 (Stand April 2007) ist.

2. Auf einem metallischen Substrat angeordnete abziehbare Beschichtung, die nach dem Verfahren gemäß Anspruch 1 hergestellt wurde.

3. Verfahren zum chemischen Fräsen von metallischen Substraten, bei dem
(A) gemäß Anspruch 1 eine abziehbare Beschichtung auf einem metallischen Substrat hergestellt wird,
(B) das metallische Substrat durch teilweises Abziehen der unter (A) hergestellten abziehbaren Beschichtung teilweise demaskiert wird, und
(C)der unter (B) erhaltene Aufbau in ein chemisches Fräsbad eingetaucht und chemisch gefräst wird.

4. Verfahren nach Anspruch 3, **dadurch gekennzeichnet, dass** das metallische Substrat Aluminium und/oder mindestens eine Aluminiumlegierung umfasst oder hieraus besteht.

5. Verfahren nach Anspruch 3 oder 4, **dadurch gekennzeichnet, dass** die Trockenschichtdicke der Abziehlackschicht 50 bis 800 Mikrometer beträgt.

6. Verfahren nach einem der Ansprüche 3 bis 5, **dadurch gekennzeichnet, dass** der Abziehlack eine physikalisch oder thermisch-chemisch härtbare Beschichtungszusammensetzung ist.

7. Verfahren nach einem der Ansprüche 3 bis 6, **dadurch gekennzeichnet, dass** die Mikrohohlkugeln einen Teilchendurchmesser (D50-Wert, volumenbezogen) von 5 bis 200 Mikrometern aufweisen.

8. Verfahren nach einem der Ansprüche 3 bis 7, **dadurch gekennzeichnet, dass** der Abziehlack einen Gehalt an organischen Lösemitteln von weniger als 500 g/l aufweist.

9. Verfahren nach einem der Ansprüche 3 bis 8, **dadurch gekennzeichnet, dass** das chemische Fräsbad ein saures oder alkalisches chemisches Fräsbad ist.

10. Verfahren nach einem der Ansprüche 3 bis 9, **dadurch gekennzeichnet, dass** der Maskenlack eine thermisch-chemisch härtbare Zweikomponenten-Beschichtungszusammensetzung ist.

11. Verfahren nach Anspruch 10, **dadurch gekennzeichnet, dass** der Maskenlack mindestens ein hydroxyfunktionelles Harz als Bindemittel sowie ein organisches Diamin in der Stammlackkomponente und mindestens ein Polyisocyanat enthaltend freie Isocyanatgruppen in der Härterkomponente enthält.

12. Verfahren nach einem der Ansprüche 3 bis 11, **dadurch gekennzeichnet, dass** die Abfolge der Schritte (B) und (C) mehrfach, beispielsweise 2- bis 10-fach, hintereinander ausgeführt werden.

13. Verfahren nach Anspruch 3 bis 12, **dadurch gekennzeichnet, dass** in einem letzten Schritt (B) der gesamte vor diesem Schritt noch beschichtete Anteil des metallischen Substrats demaskiert wird, wodurch ein vollständig demaskiertes und selektiv chemisch gefrästes metallisches Substrat erhalten wird.

14. Aufbau, der gemäß dem Verfahren nach den Ansprüchen 3 bis 12 erhalten wird, **dadurch gekennzeichnet, dass** noch ein Teil des Aufbaus mit der abziehbaren Beschichtung maskiert ist.

## Claims

1. A process for producing a peelable coating on metallic substrates, which comprises
(1) providing a metallic substrate,
(2) applying a peelable lacquer to the metallic substrate and
(3) curing the peelable lacquer applied under (2),
**characterized in that**
the peelable lacquer contains hollow microspheres, and wherein the peelable lacquer is a peelable lacquer as defined in EN ISO 4618:2006 (April 2007 version).

2. A peelable coating arranged on a metallic substrate that was produced according to the process as claimed in claim 1.

3. A process for the chemical milling of metallic substrates, wherein
(A) a peelable coating is produced on a metallic substrate according to claim 1,
(B) the metallic substrate is partially demasked by partial peeling off of the peelable coating produced under (A) and
(C) the structure obtained under (B) is immersed in a chemical milling bath and chemically milled.

4. The process as claimed in claim 3, **characterized in that** the metallic substrate comprises aluminum and/or at least one aluminum alloy or consists thereof.

5. The process as claimed in claim 3 or 4, **characterized in that** the dry layer thickness of the peelable lacquer layer is 50 to 800 micrometers.

6. The process as claimed in any one of claims 3 to 5, **characterized in that** the peelable lacquer is a physically or thermo-chemically curable coating composition.

7. The process as claimed in any one of claims 3 to 6, **characterized in that** the hollow microspheres have a particle diameter (D50 value, volume-related) from 5 to 200 micrometers.

8. The process as claimed in any one of claims 3 to 7, **characterized in that** the peelable lacquer has an organic solvents content of less than 500 g/l.

9. The process as claimed in any one of claims 3 to 8, **characterized in that** the chemical milling bath is an acidic or alkaline chemical milling bath.

10. The process as claimed in any one of claims 3 to 9, **characterized in that** the masking lacquer is a thermo-chemically curable two-component coating composition.

11. The process as claimed in claim 10, **characterized in that** the masking lacquer comprises at least one hydroxy-functional resin as binder as well as an organic diamine in the parent lacquer component and at least one polyisocyanate containing free isocyanate groups in the curing agent component.

12. The process as claimed in any one of claims 3 to 11, **characterized in that** the sequence of steps (B) and (C) can be carried out several times, for example 2 to 10 times, in succession.

13. The process as claimed in claims 3 to 12, **characterized in that**, in a last step (B), all of the fraction of the metallic substrate that is still coated before this step is demasked, whereby a completely demasked and selectively chemically milled metallic substrate is obtained.

14. A structure which is obtained according to the process as claimed in claims 3 to 12, **characterized in that** a part of the structure is still masked with the peelable coating.

## Revendications

1. Procédé servant à fabriquer un revêtement pouvant être détaché sur des substrats métalliques, comprenant
(1) la fourniture d'un substrat métallique,
(2) l'application d'un vernis détachable sur le substrat métallique, et
(3) le durcissement du vernis détachable appliqué sous (2),
**caractérisé en ce que**
le vernis détachable contient des microbilles creuses, et dans lequel le vernis détachable est un vernis détachable tel que défini dans la norme EN ISO 4618:2006 (état avril 2007).

2. Revêtement détachable disposé sur un substrat métallique, qui a été fabriqué selon la revendication 1.

3. Procédé servant à fraiser par voie chimique des substrats métalliques, où
(A) selon la revendication 1 un revêtement détachable est fabriqué sur un substrat métallique,
(B) le substrat métallique est en partie démasqué en détachant de manière partielle le revêtement détachable fabriqué à l'étape (A), et
(C) la structure obtenue à l'étape (B) est plongée dans un bain de fraisage chimique et est fraisée par voie chimique.

4. Procédé selon la revendication 3, **caractérisé en ce que** le substrat métallique comprend de l'aluminium et/ou au moins un alliage d'aluminium ou en est constitué.

5. Procédé selon la revendication 3 ou 4, **caractérisé en ce que** l'épaisseur de couche sèche de la couche de vernis détachable présente une valeur de 50 à 800 micromètres.

6. Procédé selon l'une quelconque des revendications 3 à 5, **caractérisé en ce que** le vernis détachable est une composition de revêtement pouvant être durcie de manière physique ou par voie thermique-chimique.

7. Procédé selon l'une quelconque des revendications 3 à 6, **caractérisé en ce que** les microbilles creuses présentent un diamètre de particules (valeur D50, en rapport avec le volume) de 5 à 200 micromètres.

8. Procédé selon l'une quelconque des revendications 3 à 7, **caractérisé en ce que** le vernis détachable présente une teneur en solvants organiques inférieure à 500 g/l.

9. Procédé selon l'une quelconque des revendications 3 à 8, **caractérisé en ce que** le bain de fraisage par voie chimique est un bain de fraisage acide ou alcalin chimique.

10. Procédé selon l'une quelconque des revendications 3 à 9, **caractérisé en ce que** le vernis de masque est une composition de revêtement à deux composants pouvant être durcie par voie thermique-chimique.

11. Procédé selon la revendication 10, **caractérisé en ce que** le vernis de masque contient au moins une résine hydroxy-fonctionnelle en tant que liant ainsi qu'une diamine organique dans le composant de vernis d'origine et au moins un polyisocyanate contenant des groupes isocyanate libres dans le composant de durcisseur.

12. Procédé selon l'une quelconque des revendications 3 à 11, **caractérisé en ce que** la succession des étapes (B) et (C) peut être exécutée à plusieurs reprises l'une après l'autre, par exemple 2 à 10 fois.

13. Procédé selon la revendication 3 à 12, **caractérisé en ce que** lors d'une dernière étape (B), la totalité de la fraction encore revêtue avant cette étape du substrat métallique est démasquée, ce qui permet d'obtenir un substrat métallique totalement démasqué et fraisé de manière sélective par voie chimique.

14. Structure, qui est obtenue selon le procédé selon les revendications 3 à 12, **caractérisée en ce qu'**encore une partie de la structure est masquée avec le revêtement détachable.
